# FASCICULE DE BREVET EUROPEEN

(11) **EP 3 714 237 B1**
(45) Date de publication et mention de la délivrance du brevet: **03.01.2024**
(21) Numéro de dépôt: 18803447.4
(22) Date de dépôt: 21.11.2018
(51) Int. Cl.: G01F 15/06

(54) **DISPOSITIF DE FERMETURE D'UN RÉCIPIENT COMPRENANT UN ÉLÉMENT DE MESURE DU NIVEAU DU CONTENU DUDIT RÉCIPIENT**
VORRICHTUNG ZUM VERSCHLIESSEN EINES BEHÄLTERS MIT EINEM ELEMENT ZUM MESSEN DES FÜLLSTANDES DES BEHÄLTERS
DEVICE FOR CLOSING A CONTAINER COMPRISING AN ELEMENT FOR MEASURING THE LEVEL OF THE CONTENT OF SAID CONTAINER

(30) Priorité: 21.11.2017 FR 1760996
(43) Date de publication de la demande: 30.09.2020
(73) Titulaire: TotalEnergies OneTech, 92400 Courbevoie (FR)
(72) Inventeur: CARTRON, Laurent, 44119 Treillieres (FR)
(74) Mandataire: Lavoix
(86) Numéro de dépôt international: PCT/EP2018/082064
(87) Numéro de publication internationale: WO 2019/101788

(56) Documents cités:
- EP-A1- 2 180 299
- EP-A2- 1 650 536
- WO-A2-2006/138464
- US-A1- 2016 180 690

## Description

La présente invention concerne un dispositif de mesure d'un niveau de contenu dans un récipient comprenant un dispositif de fermeture d'un récipient comprenant au moins un premier bouchon, comprenant au moins une paroi principale, destiné à être fixé sur le goulot d'une ouverture du récipient, ladite paroi principale entourant et définissant un volume interne fermé du côté d'un bord supérieur de ladite paroi principale et ouvert du côté d'un bord inférieur de ladite paroi principale.

L'invention concerne en outre un procédé de mesure du niveau d'un contenu dans un récipient au moyen d'un tel dispositif de mesure.

US 2016/180690 A1 divulgue un dispositif de mesure d'un niveau de contenu dans un récipient.

Il a été proposé de permettre la détermination du niveau du contenu, par exemple un liquide, d'un récipient notamment lorsque le récipient ne permet pas de connaître ce niveau par une simple observation depuis l'extérieur du récipient. La précision de mesure par un tel procédé reste cependant améliorable. De plus, lorsque la paroi du récipient est opaque ou lorsque la paroi du récipient est masquée par son environnement, il est difficile voire impossible de déterminer le niveau de contenu par observation.

L'un des buts de l'invention est de pallier ces inconvénients en proposant un dispositif de mesure selon la revendication 1.

Optionnellement, le dispositif de mesure selon l'invention est selon l'une ou plusieurs des revendications 1 à 10.

Selon un autre aspect, l'invention concerne un procédé de mesure selon la revendication 11.

Optionnellement, le procédé de mesure est selon la revendication 12.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un dispositif de mesure comprenant un dispositif de fermeture selon l'invention,
- la Fig. 2 est une représentation schématique en coupe d'un dispositif de fermeture selon un premier mode de réalisation de l'invention,
- la Fig. 3 est une représentation schématique en coupe d'un dispositif de fermeture selon une variante du premier mode de réalisation,
- la Fig. 4 est une représentation schématique en coupe d'un dispositif de fermeture selon un deuxième mode de réalisation de l'invention, et
- les Figs. 5 et 6 sont des représentations schématiques d'une étiquette d'identification vue de dessus et vue de face selon un mode de réalisation de l'invention.

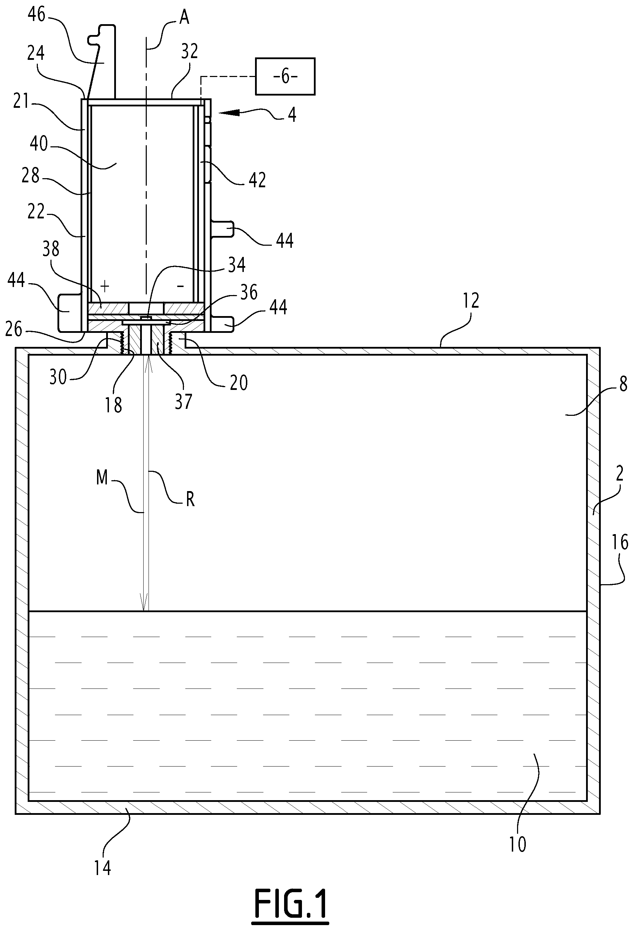

En référence à la Fig. 1, un dispositif de mesure du niveau d'un contenu dans un récipient comprenant un récipient 2, un dispositif de fermeture 4 du récipient 2 et un système de gestion 6, est décrit.

Le récipient 2 peut être de toute nature envisageable tant qu'il définit un volume interne 8 apte à contenir un contenu 10, par exemple liquide. Ainsi, le récipient 2 est par exemple un fût, un bidon, un réservoir, une bouteille ou autre, de toute forme et de toute contenance envisageables.

Selon un mode de réalisation, le récipient 2 comprend une paroi supérieure 12, une paroi inférieure 14 et au moins une paroi latérale 16 reliant les parois supérieure 12 et inférieure 14 de sorte à délimiter le volume interne 8 s'étendant entre les parois supérieure 12, inférieure 14 et latérale 16. Le volume interne 8 est par exemple sensiblement parallélépipédique et le récipient 2 comprend quatre parois latérales 16 délimitant le volume interne 8. Ainsi, le récipient représenté est de type « jerrican ». Il est cependant entendu que le volume interne 8 peut avoir toute autre forme. A titre d'exemple, la paroi latérale 16 est un cylindre de révolution de sorte à former un récipient en forme de bidon ou de tonneau. Avantageusement, la paroi inférieure 14 est conformée pour que le récipient 2 puisse reposer de façon stable sur cette paroi inférieure 14 lorsque le récipient 2 est dans une position relevée. En variante, le récipient 2 est agencé pour former un réservoir dont la forme est adaptée à l'environnement dans lequel ce réservoir est installé.

La paroi supérieure 12 comprend une ouverture 18 permettant de remplir et de vider le volume interne 8. A cet effet, l'ouverture 18 est par exemple l'unique ouverture ou l'une des ouvertures du récipient plaçant le volume interne 8 en communication fluidique avec l'extérieur du récipient 2. L'ouverture 18 s'étend selon un axe principal A sensiblement perpendiculaire à la paroi supérieure 12. L'axe principal A s'étend sensiblement verticalement lorsque le récipient est dans sa position relevée, comme représenté sur la Fig. 1. Dans la description, les termes « supérieur », « inférieur », « en dessous de » et « au-dessus de » sont défini selon l'axe principal A.

Selon un mode de réalisation, l'ouverture 18 est située au voisinage de la ou d'une des parois latérales 16. Plus particulièrement, selon un exemple particulier, l'ouverture 18 est située à une distance inférieure à 60 mm de la paroi 16.

L'ouverture 18 est par exemple délimitée par un goulot 20, formant l'embouchure de l'ouverture 18 et s'étendant en saillie de la paroi supérieure 12 selon l'axe principal A vers l'extérieur du récipient 2. Le goulot 20 présente par exemple une forme de cylindre de révolution s'étendant selon et autour de l'axe principal A. Le goulot 20 est par exemple pourvu sur sa face extérieure ou intérieure d'un filetage agencé pour recevoir le dispositif de fermeture 4 par vissage.

Le volume interne 8 est apte à recevoir tout type de contenu, par exemple un contenu liquide, plus ou moins visqueux, tel que de l'huile, des hydrocarbures liquides ou autre. Le contenu peut également se présenter sous forme de solides, par exemple une poudre ou autre.

Le dispositif de fermeture comprend au moins un premier bouchon 21 agencé pour fermer l'ouverture 18, par exemple de façon étanche, lorsqu'il est fixé sur le récipient 2.

Le premier bouchon 21 comprend au moins une paroi principale 22, formant le corps du bouchon 21. La paroi principale 22 s'étend sensiblement selon l'axe principal A, lorsque le bouchon 4 est fixé sur le récipient 2, entre un bord supérieur 24 et un bord inférieur 26. La paroi principale 22 définit un volume interne 28 s'étendant autour de l'axe principal A, lorsque le premier bouchon 21 est fixé sur le récipient, et délimité par la paroi principale 22 selon les directions radiales, sensiblement perpendiculaires à l'axe principal A, et par les bords supérieur 24 et inférieur 26 selon la direction de l'axe principal A.

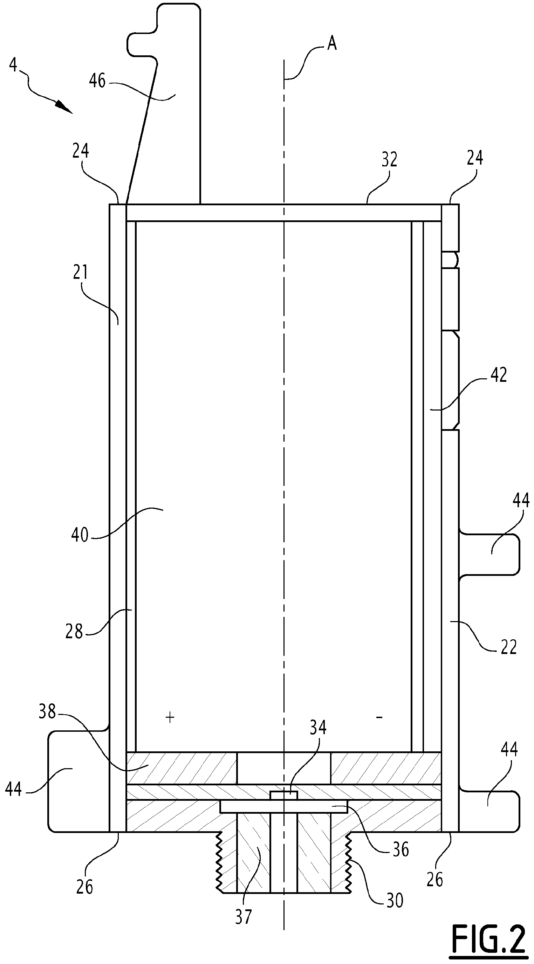

Selon un mode de réalisation, la paroi principale 22 comprend une partie dont la forme est sensiblement complémentaire de celle du goulot 20, de sorte que la paroi principale 22 peut être introduite dans le goulot 20 et coopérer avec celui-ci pour fixer le premier bouchon 21 sur le récipient 2, comme représenté sur la Fig. 1. Selon un mode de réalisation, la face surface intérieure du goulot 20 est pourvue d'un filetage et une partie de la surface extérieure de la paroi principale 22 est pourvue d'un filetage complémentaire 30 (Fig. 2) de sorte que la paroi principale 22 peut être vissée dans le goulot 20 pour fixer le bouchon 4 sur le récipient 2. Selon un autre mode de réalisation, le bouchon 4 comprend une paroi supplémentaire (non représentée) s'étendant autour et sensiblement parallèlement à la paroi principale 22, la paroi supplémentaire étant agencée pour se fixer sur la surface extérieure du goulot 20, par exemple par vissage, lorsque la paroi principale 22 est introduite dans le goulot 20. Dans ce cas, la paroi principale 22 n'est pas nécessairement complémentaire de la surface intérieure du goulot 20.

La paroi principale 22 présente par exemple une forme de cylindre de révolution. En variante, le bouchon 4 comprend plusieurs parois principales reliées entre elles de sorte à entourer le volume interne 28. Dans ce cas, les parois principales 22 forment un corps de forme parallélépipédique par exemple.

Comme indiqué précédemment, le volume interne 28 est fermé selon les directions radiales par la paroi principale 22. En outre, le volume interne 28 est fermé du côté du bord supérieur 24, par exemple par une paroi supérieure 32 recouvrant le volume interne 28 et le bord supérieur 24 de la ou les parois principales 22. La paroi supérieure 32 s'étend par exemple dans un plan sensiblement radial perpendiculaire à l'axe principal A lorsque le premier bouchon 21 est fixé sur le récipient. Le volume interne 28 est ouvert du côté du bord inférieur 26 de la ou des parois principales 22, c'est-à-dire que le corps du premier bouchon 21 laisse un accès au volume interne 28 du côté du bord inférieur 26.

Ainsi, lorsque le premier bouchon 21 est fixé sur le récipient 2, le volume interne 28 du premier bouchon 21 est ouvert vers le volume interne 8 du récipient 2 et l'ouverture du volume interne 28 du bouchon 2 fait face au contenu 10 du récipient 2, comme représenté sur la Fig. 1.

Dans le volume interne 28, le premier bouchon 21 reçoit au moins un élément de mesure 34 du niveau du contenu 10 dans le récipient 2. Un tel élément de mesure 34 est agencé pour émettre un signal de mesure M vers le contenu 10 en passant par le côté ouvert du premier bouchon 21, comme représenté sur la Fig. 1. De façon connue, le signal de mesure M est par exemple réfléchi par le contenu 10 et récupéré par l'élément de mesure 34 ou par un autre élément de mesure également disposé dans le volume interne 28 et un calculateur détermine le niveau du contenu 10 en fonction du temps écoulé entre l'émission du signal de mesure M et la réception du signal réfléchi R. C'est-à-dire que la détermination du niveau du contenu 10 est fondée sur le temps de trajet du signal de mesure M. Comme décrit ultérieurement, le calculateur peut être intégré dans le bouchon 4 et/ou dans le système de gestion 6.

Avantageusement, l'élément de mesure 34 est agencé pour émettre le signal de mesure M après la fixation du dispositif de fermeture 4 sur le goulot 20.

Selon l'invention, l'élément de mesure 34 est un capteur ultrasonore émettant une vibration ultrasonore comme signal de mesure M. Un tel capteur émet un signal de mesure selon un cône d'émission d'axe sensiblement aligné sur l'axe principal A. Le capteur ultrasonore comprend par exemple une lame piézoélectrique agencée pour vibrer, lorsqu'elle est alimentée, à une fréquence comprise dans la gamme des ultrasons. Selon un mode de réalisation avantageux par effet mécanique de tube et le réglage de puissance d'émission, l'angle du cône d'émission est faible, et notamment inférieur à 10°. Un tel mode de réalisation permet de positionner le capteur à proximité de la paroi latérale 16 du récipient sans que cette paroi n'interfère dans la mesure réalisée par le capteur. En effet, avec un cône d'émission présentant un angle important, le signal de mesure est susceptible d'être réfléchi par la paroi latérale, ce signal réfléchi pouvant perturber la mesure en étant pris en compte dans le calcul du niveau du contenu 10. Un cône d'émission présentant un angle faible permet donc d'utiliser le bouchon 4 même lorsque l'ouverture 18 du récipient 2 s'étend au voisinage de la paroi latérale 16 du récipient 2.

De même de tels capteurs (ultrasonore à faible cône d'émission) permettent d'utiliser le premier bouchon 21 avec un récipient contenant un obstacle dans le volume interne 8, tel qu'une pompe ou autre, sans que cet obstacle ne perturbe la mesure du niveau du contenu 10, tant que cet obstacle n'est pas situé directement en regard de l'élément de mesure 34.

Le dispositif de fermeture 4 comprend en outre un élément de protection 36 interposé entre l'élément de mesure 34 et le contenu 10 du récipient 2 afin d'empêcher une détérioration de l'élément de mesure 34 par le contenu 10. L'élément de protection 36 est intégré au premier bouchon 21 et s'étend entre l'élément de mesure 34 et le bord inférieur 26 de la paroi principale 22 du premier bouchon 21. L'élément de protection 36 est transparent au signal de mesure M émis par l'élément de mesure 34. Par transparent au signal de mesure M, on entend que le signal de mesure M n'est pas modifié lorsqu'il traverse l'élément de protection 36. Le signal de mesure M traverse donc l'élément de protection 36 lorsqu'il est émis par l'élément de mesure 34. L'élément de protection 36 est en outre transparent au signal réfléchi R, qui est de même nature que le signal de mesure M, de sorte que le signal réfléchi R peut traverser l'élément de protection 36, sans être modifié, vers l'élément de mesure 34. Ainsi, l'élément de protection 36 peut être interposé entre l'élément de mesure 34 et le contenu 10 du récipient 2 sans perturber la mesure effectuée par l'élément de mesure 34.

Dans le cas d'un capteur ultrasonore, l'élément de protection 36 est par exemple un revêtement en matériau plastique appliqué sur l'élément de mesure 34 et vibrant avec celui-ci. Ainsi, le revêtement recouvre la face de la lame piézoélectrique tournée vers le volume interne 8 du récipient 2 lorsque le dispositif de fermeture 4 est fixé sur le récipient 2. Le revêtement peut en outre être agencé pour fermer, par exemple par l'intermédiaire d'un support du capteur ultrasonore fixé à la paroi principale, le volume interne 28 de sorte à empêcher toute pénétration du contenu 10 dans le volume interne 28.

Comme représenté sur la Fig. 2, le volume interne 28 du premier bouchon 21 peut en outre recevoir une carte électronique 38 permettant de commander l'élément de mesure 34. La carte électronique permet de piloter l'élément de mesure 34 pour que celui-ci émette le signal de mesure M voulu. En outre, la carte électronique comprend des moyens pour mesurer le temps écoulé entre l'émission du signal de mesure M et la réception du signal réfléchi R. Selon un mode de réalisation, la carte électronique 38 intègre également le calculateur permettant de convertir le temps écoulé mesuré en niveau du contenu 10 dans le récipient 2.

Selon un premier mode de réalisation, un dispositif d'alimentation 40 de l'élément de mesure 34 est intégré dans le volume interne 28 du premier bouchon 21. Le dispositif d'alimentation 40 est agencé pour alimenter en énergie l'élément de mesure 34 et la carte électronique 38 afin que l'élément de mesure 34 puisse émettre le signal de mesure M et afin que la carte électronique 38 puisse remplir ses fonctions. Le dispositif d'alimentation 40 est par exemple formé par une batterie connectée électriquement à la carte électronique 38 elle-même connectée électriquement à l'élément de mesure 34.

Selon un mode de réalisation, une antenne 42 est en outre intégrée dans le volume interne 28 du premier bouchon 21. L'antenne 42 est connectée à la carte électronique 38 et permet de transmettre un signal d'information vers le système de gestion 6 lorsque celui-ci n'est pas intégré dans le dispositif de fermeture 4, comme cela va à présent être décrit.

Le système de gestion 6 peut en effet être formé par une plateforme informatique permettant de gérer un ensemble de dispositifs de mesure de niveau du contenu d'une pluralité de récipients 2. Dans ce cas, chaque dispositif de fermeture 4 peut communiquer avec le système de gestion 6 par l'intermédiaire de l'antenne 42. Le signal d'information transmis par l'antenne 42 est par exemple représentatif de la valeur du niveau du contenu 10 dans le récipient 2 auquel le dispositif de fermeture 4 est fixé lorsque cette valeur a été déterminée par le calculateur intégré dans la carte électronique 38. En variante, le signal d'information transmis par l'antenne 42 est représentatif du temps écoulé entre l'émission du signal de mesure M et la réception du signal réfléchi R et le calcul du niveau du contenu 10 est réalisé par le système de gestion 6. Le système de gestion 6 peut transmettre des instructions au dispositif de fermeture 4 par l'intermédiaire de l'antenne 42 afin, par exemple, de déclencher une mesure du niveau du contenu 10. Le système de gestion 6 est par exemple accessible par une application internet pour des utilisateurs distants. Un tel système de gestion 6 permet de gérer un ensemble de récipients pour des chaînes d'approvisionnement, des stations-services ou autre.

Dans ce cas, chaque récipient 2 est par exemple équipé d'une étiquette d'identification 43 et le dispositif de fermeture 4 fixé sur ce récipient 2 est pourvu d'un moyen de lecture de l'étiquette d'identification et le signal d'information émis par l'antenne 42 d'un dispositif de fermeture 4 est associé à l'identité du récipient 2, sur lequel ce dispositif de fermeture 4 est fixé, dans le système de gestion 6. Selon un exemple, l'étiquette d'identification 43 est électronique et la carte électronique 38 est équipée d'un dispositif de communication en champs proche NFC (pour Near Field Contact) permettant de lire les informations de l'étiquette électronique d'identification. En variante, l'étiquette d'identification 43 est formée par un code imprimé (Code barre, QR, autres) et le dispositif de fermeture est équipé d'un dispositif de lecture optique apte à lire les informations de ce code imprimé.

Avantageusement, le dispositif de fermeture 4 est agencé pour identifier l'identité du récipient 2 pendant la fixation du dispositif de fermeture 4 sur le goulot 20.

En variante ou en complément, le dispositif de fermeture 4 peut être équipé d'un dispositif d'affichage apte à afficher le niveau du contenu mesuré par le dispositif de mesure. Dans ce cas, le dispositif de fermeture 4 peut être utilisé en totale autonomie sans passer par un système de gestion 6 distant.

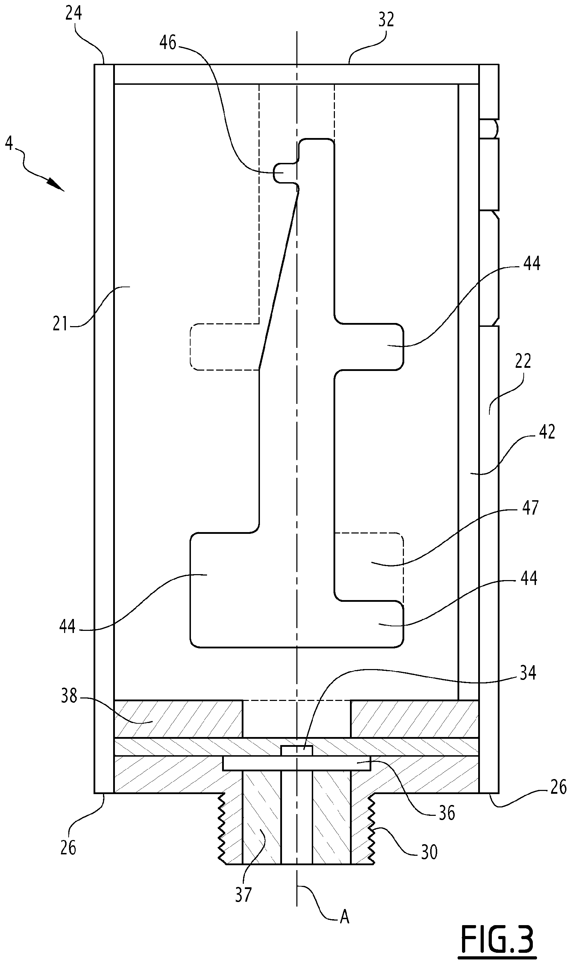

La paroi principale 22 du premier bouchon 21 (ou en variante sa paroi supplémentaire), peut être conformée pour comprendre un élément d'ouverture 44, 46 d'une capsule et/ou d'un bouchon fermant l'embouchure de l'ouverture 18 du récipient 2 afin de remplacer un bouchon classique fermant le récipient 2 par un dispositif de fermeture selon l'invention permettant de mesurer le niveau du contenu 10 de ce récipient. Ainsi, la paroi est par exemple conformée pour comprendre une ou plusieurs clés 44 agencée pour coopérer avec un ou plusieurs alésages correspondant sur un bouchon classique, la coopération entre la ou plusieurs clés 44 avec un ou plusieurs alésages permettant de dévisser le bouchon classique du récipient 2. En variante ou en complément, la paroi est conformée pour comprendre un décapsuleur 46 permettant de retirer une capsule ou un opercule fermant l'ouverture 18 du récipient 2. Ainsi, le dispositif de fermeture 4 intègre les outils nécessaires à l'ouverture du récipient afin de permettre le remplacement du bouchon fixé sur le récipient par le dispositif de fermeture 4 selon l'invention, ce qui ne nécessite pas d'avoir d'outil supplémentaire. Selon une variante représentée sur la Fig. 3, la ou les clés 44 et/ou le décapsuleur 46 sont formés par ou un plusieurs outils séparés du premier bouchon 21 et retenu de façon amovible sur celui-ci dans une ou plusieurs empreintes 47 prévues à cet effet dans le corps du premier bouchon 21.

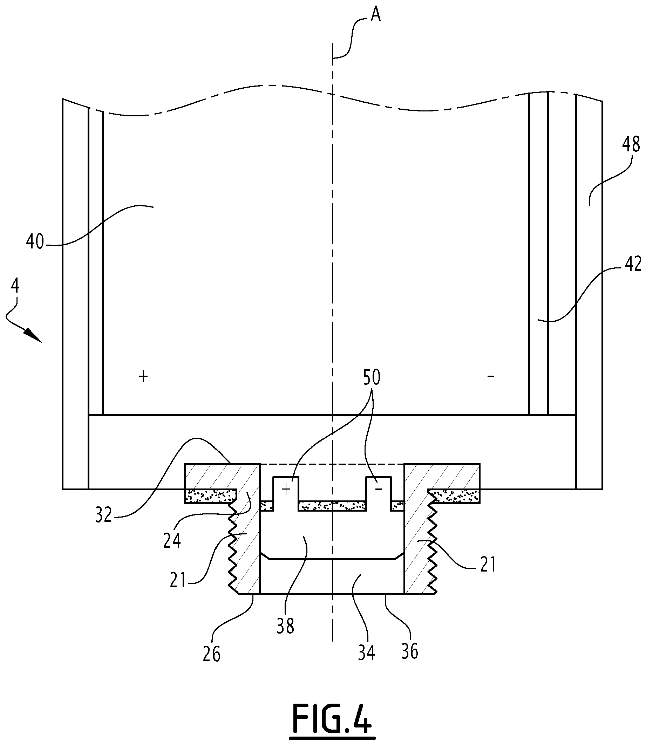

Selon un deuxième mode de réalisation représenté sur la Fig. 4, le dispositif de fermeture 4 comprend un deuxième bouchon 48. Le volume interne 28 du premier bouchon 21 intègre, dans ce cas, les éléments électroniques passifs, c'est-à-dire ceux qui nécessitent d'être alimentés en énergie pour fonctionner, tandis que le dispositif d'alimentation 40, et par exemple l'antenne 42, est intégré dans le deuxième bouchon 48. Ainsi, le premier bouchon 21 intègre l'élément de mesure 34 et la carte électronique 38. Un tel premier bouchon 21 peut être fixé sur une pluralité de récipients 2, par exemple en tant qu'opercule fermant l'ouverture lors du conditionnement du contenu dans les récipients. Puis, à un stade ultérieur, le deuxième bouchon 48 peut être fixé sur le premier bouchon 21 lorsque la mesure du niveau du contenu 10 est souhaitée. Le deuxième bouchon 48 est par exemple agencé pour mettre en contact des bornes 50 du dispositif d'alimentation 40 avec des bornes correspondantes du premier bouchon 21 permettant d'alimenter en énergie les composants électroniques passifs lorsque le deuxième bouchon 48 est fixé, par exemple par vissage, sur la paroi principale du premier bouchon 21, à l'extérieur du volume interne 28, ou sur le goulot 20 du récipient.

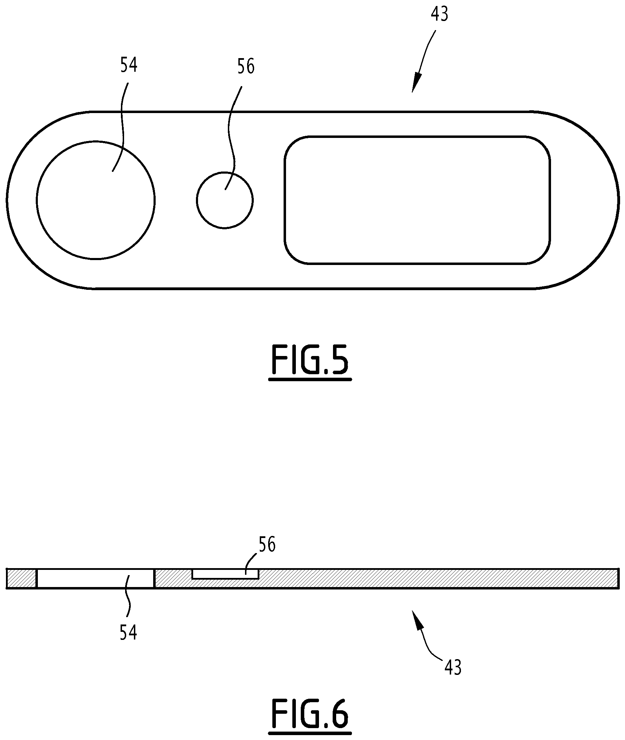

Les Figs. 5 et 6 présentent l'étiquette d'identification 43 selon un mode de réalisation de l'invention. Le dispositif de lecture de l'étiquette d'identification 43 est configuré pour être en regard de l'étiquette d'identification 43 quand le dispositif de fermeture 4 est fixé sur le récipient 2.

L'étiquette d'identification 43 comprend une ouverture traversante 54 configurée pour entourer le goulot 20, et une niche 56.

La niche 56 reçoit par exemple une puce électronique. La puce électronique est apte à communiquer des informations d'indentification de l'étiquette d'identification 43 avec la carte électronique 38. En variante, la niche 56 est reçoit un code imprimé (Code barre, QR, ou autres). La distance entre le centre de l'ouverture traversante 54 et le centre de la niche 56 est déterminée de sorte à faciliter la lecture de la puce électronique ou le code imprimé par le moyen de lecture de l'étiquette d'identification.

Le procédé de fermeture du récipient 2 par le dispositif de fermeture 4 décrit ci-dessus va maintenant être brièvement décrit.

Lorsqu'un utilisateur souhaite fermer le récipient 2, il dispose le dispositif de fermeture 4 au-dessus le goulot 20 et commence à fixer le dispositif de fermeture 4 sur le goulot 20, par exemple par vissage.

Pendant la fixation du dispositif de fermeture 4 sur le goulot 20, le moyen de lecture de l'étiquette d'identification se positionne en regard ou à portée de lecture de l'étiquette d'identification 43 de sorte qu'il soit apte à lire l'étiquette d'identification 43.

Selon un premier mode de réalisation, le moyen de lecture de l'étiquette d'identification lit l'étiquette d'identification 43 pendant le vissage du dispositif de fermeture 4 sur le goulot 20. Dans le cas où l'étiquette d'identification 43 comprend une puce électronique, le dispositif de communication en champs proche NFC lit les informations de l'étiquette d'identification 43. Selon la variante où l'étiquette d'identification 43 comprend un code imprimé, le dispositif de lecture optique lit les informations du code imprimé.

Le dispositif de fermeture 4 émet ensuite le signal d'information associé à l'identité du récipient 2 dans le système de gestion 6.

Après que le dispositif de fermeture 4 est fixé sur le goulot 20, l'élément de mesure 34 mesure le niveau de contenu 10 dans le récipient 2. Pour ceci, l'élément de mesure 34 émet une vibration ultrasonore formant un signal de mesure M vers le contenu 10. Le déclenchement de la mesure est par exemple effectué par un actionneur mécanique du dispositif de fermeture 4.

Selon un deuxième mode de réalisation, le moyen de lecture ne lit l'étiquette d'identification 43 qu'après la fixation du dispositif de fermeture 4 sur le goulot 20. L'émission du signal d'information dans le système de gestion 6 n'est déclenchée qu'à l'actionnement de l'actionneur mécanique.

Selon ce mode, l'identification du récipient 2 n'est effectuée qu'après la bonne fermeture du récipient 2 par le dispositif de fermeture 4. Ceci permet notamment de s'assurer de la bonne fermeture du récipient 2 car l'identification ne s'effectue que lorsque le récipient 2 a été correctement fermé.

Le dispositif de mesure 4 transmet ensuite le signal d'information représentatif du niveau du contenu 10 du récipient 2 mesuré par l'élément de mesure 34 au système de gestion 6 des informations. Selon un mode de réalisation, le dispositif de mesure 4 transmet le signal d'information en temps réel au système de gestion 6, par exemple au moyen d'un réseau « Liaison sans fil à faible consommation énergétique », également connu sous son acronyme anglais LPWAN (pour « *Low Power Wide Area Network* »). En variante, le dispositif de mesure 4 stocke les signaux d'information puis les transmet de manière asynchrone, par exemple au moyen de connexion sans fil par radiofréquence type UHF Bluetooth ou SHF Wifi entre le dispositif de mesure 4 et un téléphone mobile, par exemple.

Grâce à l'invention décrite ci-dessus, le dispositif de fermeture 4 permet de mesurer le niveau de contenu de manière précise sans voir le niveau de contenu.

## Revendications

1. Dispositif de mesure d'un niveau de contenu dans un récipient, comprenant un récipient (2) contenant un contenu (10), et un dispositif de fermeture (4) du récipient (2), fixé sur le récipient, le dispositif de fermeture (4) comprenant au moins un premier bouchon (21), comprenant au moins une paroi principale (22), destiné à être fixé sur le goulot (20) d'une ouverture (18) du récipient (2), ladite paroi principale (22) entourant et définissant un volume interne (28) fermé du côté d'un bord supérieur (24) de ladite paroi principale (22) et ouvert du côté d'un bord inférieur (26) de ladite paroi principale (22), ledit dispositif de fermeture (4) comprenant en outre au moins un élément de mesure (34) de niveau d'un contenu (10) du récipient (2), ledit élément de mesure (34) étant logé dans ledit volume interne (28) et émettant un signal de mesure (M) vers le côté ouvert dudit volume interne (28), le signal de mesure (M) étant une vibration ultrasonore émise par un élément vibrant de l'élément de mesure (34),
dans lequel l'élément de mesure (34) est agencé pour émettre un signal de mesure (M) vers le contenu (10) afin d'en déterminer le niveau, le dispositif de fermeture (4) étant agencé pour transmettre un signal d'information représentatif du niveau du contenu (10) du récipient (2) mesuré par l'élément de mesure (34) à un système de gestion (6) desdites informations,
**caractérisé en ce que**
le récipient (2) comprend une étiquette d'identification (43), le dispositif de fermeture (4) comprenant un dispositif de lecture de ladite étiquette d'identification (43) de sorte que le signal d'information est lié à l'identité du récipient (2) dans le système de gestion (6).

2. Dispositif de mesure selon la revendication 1, dans lequel l'élément de mesure (34) est agencé pour émettre le signal de mesure (M) après la fixation du dispositif de fermeture (4) sur le goulot (20).

3. Dispositif de mesure selon la revendication 2, agencé pour identifier l'identité du récipient (2) pendant la fixation du dispositif de fermeture (4) sur le goulot (20).

4. Dispositif de mesure selon l'une quelconque des revendications précédentes, comprenant en outre un revêtement appliqué sur ledit élément vibrant formant un élément de protection (36) s'étendant entre l'élément de mesure (34) et le bord inférieur (26) de la paroi principale (22) et transparent au signal de mesure (M) émis par l'élément de mesure (34).

5. Dispositif de mesure selon l'une quelconque des revendications 1 à 4, comprenant en outre un dispositif d'alimentation (40) de l'élément de mesure (34), ledit élément de mesure (34) étant apte à émettre le signal de mesure (M) lorsqu'il est alimenté en énergie par ledit dispositif d'alimentation (40).

6. Dispositif de mesure selon la revendication 5, dans lequel le dispositif d'alimentation (40) est logé dans le volume interne (28) et connecté électriquement à l'élément de mesure (34).

7. Dispositif de mesure selon la revendication 5, dans lequel le dispositif d'alimentation (40) est solidaire d'un deuxième bouchon (48) apte à être fixé sur la paroi principale (22) du premier bouchon (21) à l'extérieur du volume interne (28) ou sur le goulot (20) de l'ouverture (18) du récipient (2), l'élément de mesure (34) étant alimenté par le dispositif d'alimentation (40) lorsque ledit deuxième bouchon (48) est fixé sur ledit premier bouchon (21) ou sur ledit goulot (20).

8. Dispositif de mesure selon l'une quelconque des revendications 1 à 7, comprenant en outre une antenne (42), logée dans le volume interne (28), ladite antenne (42) étant agencée pour émettre un signal d'information représentatif du niveau du contenu (10) du récipient (2) mesuré par l'élément de mesure (34).

9. Dispositif de mesure selon l'une quelconque des revendications 1 à 8, dans lequel la paroi principale (22) est conformée pour comprendre un élément d'ouverture (44, 46) d'une capsule et/ou d'un bouchon fermant l'ouverture (18) du récipient (2).

10. Dispositif de mesure selon l'une quelconque des revendications précédentes, dans lequel le dispositif de lecture de l'étiquette d'identification (43) est configuré à être en regard ou à portée de lecture de l'étiquette d'identification (43) quand le dispositif de fermeture (4) est fixé sur le récipient (2).

11. Procédé de mesure du niveau d'un contenu dans un récipient (2) au moyen d'un dispositif de mesure selon l'une quelconque des revendications 1 à 10, comportant les étapes suivantes :
- fermeture du récipient (2) contenant le contenu (10) par le dispositif de fermeture (4),
- émission d'un signal de mesure (M) par l'élément de mesure (34) vers un volume interne (28) du récipient (2) pour déterminer le niveau du contenu (10) dans le récipient (2),
dans lequel l'élément de mesure (34) émet un signal de mesure (M) vers le contenu (10) afin d'en déterminer le niveau, le dispositif de fermeture (4) transmettant un signal d'information représentatif du niveau du contenu (10) du récipient (2) mesuré par l'élément de mesure (34) à un système de gestion (6) desdites informations,
le récipient (2) comprenant une étiquette d'identification (43), le dispositif de fermeture (4) comprenant un dispositif de lecture de ladite étiquette d'identification (43) de sorte que le signal d'information est lié à l'identité du récipient (2) dans le système de gestion (6).

12. Procédé de mesure du niveau selon la revendication 11, dans lequel le dispositif de lecture de l'étiquette d'identification (43) est disposé en regard ou à portée de lecture de l'étiquette d'identification (43) quand le dispositif de fermeture (4) est fixé sur le récipient (2).

## Patentansprüche

1. Vorrichtung zum Messen eines Füllstands in einem Behälter, umfassend einen Behälter (2), der einen Inhalt (10) enthält, und eine Verschlussvorrichtung (4) des Behälters (2), die an dem Behälter befestigt ist, die Verschlussvorrichtung (4) umfassend mindestens einen ersten Stopfen (21), umfassend mindestens eine Hauptwand (22), die dazu bestimmt ist, am Hals (20) einer Öffnung (18) des Behälters (2) befestigt zu werden, wobei die Hauptwand (22) ein Innenvolumen (28) umgibt und definiert, das auf der Seite eines oberen Rands (24) der Hauptwand (22) geschlossen und auf der Seite eines unteren Rands (26) der Hauptwand (22) offen ist, die Verschlussvorrichtung (4) ferner umfassend mindestens ein Element (34) zum Messen des Füllstands eines Inhalts (10) des Behälters (2), wobei das Messelement (34) in dem Innenvolumen (28) untergebracht ist und ein Messsignal (M) in Richtung der offenen Seite des Innenvolumens (28) aussendet, wobei das Messsignal (M) eine Ultraschallschwingung ist, die von einem schwingenden Element des Messelements (34) ausgesendet wird,
wobei das Messelement (34) angeordnet ist, um ein Messsignal (M) an den Inhalt (10) zu senden, um dessen Füllstand zu bestimmen, wobei die Verschlussvorrichtung (4) angeordnet ist, um ein Informationssignal, das repräsentativ für den von dem Messelement (34) gemessenen Füllstand des Inhalts (10) des Behälters (2) ist, an ein Verwaltungssystem (6) der Informationen zu übertragen,
**dadurch gekennzeichnet , dass** der Behälter (2) ein Identifikationsetikett (43) umfasst, die Verschlussvorrichtung (4) umfassend eine Lesevorrichtung des Identifikationsetiketts (43), sodass das Informationssignal mit der Identität des Behälters (2) in dem Verwaltungssystem (6) verbunden ist.

2. Messvorrichtung nach Anspruch 1, wobei das Messelement (34) angeordnet ist, um das Messsignal (M) auszugeben, nachdem die Verschlussvorrichtung (4) an dem Hals (20) befestigt wurde.

3. Messvorrichtung nach Anspruch 2, die angeordnet ist, um die Identität des Behälters (2) während der Befestigung der Verschlussvorrichtung (4) an dem Hals (20) zu identifizieren.

4. Messvorrichtung nach einem der vorherigen Ansprüche, ferner umfassend eine Beschichtung, die auf das schwingende Element aufgebracht ist und ein Schutzelement (36) bildet, das sich zwischen dem Messelement (34) und dem unteren Rand (26) der Hauptwand (22) erstreckt und für das von dem Messelement (34) emittierte Messsignal (M) transparent ist.

5. Messvorrichtung nach einem der Ansprüche 1 bis 4, ferner umfassend eine Versorgungsvorrichtung (40) des Messelements (34), wobei das Messelement (34) das Messsignal (M) emittieren kann, wenn es von der Versorgungsvorrichtung (40) mit Energie versorgt wird.

6. Messvorrichtung nach Anspruch 5, wobei die Versorgungsvorrichtung (40) in dem Innenvolumen (28) untergebracht und elektrisch mit dem Messelement (34) verbunden ist.

7. Messvorrichtung nach Anspruch 5, wobei die Versorgungsvorrichtung (40) fest mit einem zweiten Stopfen (48) verbunden ist, der geeignet ist, um an der Hauptwand (22) des ersten Stopfens (21) außerhalb der Öffnung des Innenvolumens (28) oder an dem Hals (20) der Öffnung (18) des Behälters (2) befestigt zu werden, wobei das Messelement (34) von der Versorgungsvorrichtung (40) versorgt wird, wenn der zweite Stopfen (48) an dem ersten Stopfen (21) oder an dem Hals (20) befestigt ist.

8. Messvorrichtung nach einem der Ansprüche 1 bis 7, ferner umfassend eine Antenne (42), die in dem Innenvolumen (28) untergebracht ist, wobei die Antenne (42) angeordnet ist, um ein Informationssignal zu emittieren, das für den Stand des Inhalts (10) des Behälters (2) repräsentativ ist, der von dem Messelement (34) gemessen wird.

9. Messvorrichtung nach einem der Ansprüche 1 bis 8, wobei die Hauptwand (22) geformt ist, um ein Öffnungselement (44, 46) einer Kapsel und/oder eines Stopfens zu umfassen, die/der die Öffnung (18) des Behälters (2) verschließt.

10. Messvorrichtung nach einem der vorherigen Ansprüche, wobei die Identifikationsetikett-Lesevorrichtung (43) konfiguriert ist, um dem Identifikationsetikett (43) gegenüber zu sein oder in Reichweite des Lesens davon zu sein, wenn die Verschlussvorrichtung (4) an dem Behälter (2) befestigt ist.

11. Verfahren zum Messen des Füllstands eines Inhalts in einem Behälter (2) mittels einer Messvorrichtung nach einem der Ansprüche 1 bis 10, umfassend die folgenden Schritte:
- Verschließen des Behälters (2) mit dem Inhalt (10) durch die Verschlussvorrichtung (4),
- Emittieren eines Messsignals (M) durch das Messelement (34) an ein Innenvolumen (28) des Behälters (2), um den Füllstand des Inhalts (10) in dem Behälter (2) zu bestimmen,
wobei das Messelement (34) ein Messsignal (M) an den Inhalt (10) sendet, um dessen Füllstand zu bestimmen, wobei die Verschlussvorrichtung (4) ein Informationssignal, das repräsentativ für den von dem Messelement (34) gemessenen Füllstand des Inhalts (10) des Behälters (2) ist, an ein Verwaltungssystem (6) der Informationen überträgt,
der Behälter (2) umfassend ein Identifikationsetikett (43), die Verschlussvorrichtung (4) umfassend eine Lesevorrichtung des Identifikationsetiketts (43), sodass das Informationssignal mit der Identität des Behälters (2) in dem Verwaltungssystem (6) verbunden ist.

12. Verfahren zum Messen des Füllstands nach Anspruch 11, wobei die Lesevorrichtung des Identifikationsetiketts (43) gegenüber oder in Reichweite des Identifikationsetiketts (43) angeordnet ist, wenn die Verschlussvorrichtung (4) an dem Behälter (2) befestigt ist.

## Claims

1. A device for measuring a level of contents in a container, comprising a container (2) containing contents (10), and a closure device (4) for the container (2), fixed to the container, the closure device (4) comprising at least one first stopper (21), comprising at least one main wall (22), for to be fixed to the neck (20) of an opening (18) of the container (2), said main wall (22) surrounding and defining an internal volume (28) closed on the side of a top edge (24) of said main wall (22) and open on the side of a bottom edge (26) of said main wall (22), said closure device (4) further comprising at least one element (34) for measuring the level of a content (10) of the container (2), said measuring element (34) being housed in said internal volume (28) and emitting a measuring signal (M) towards the open side of said internal volume (28), the measuring signal (M) being an ultrasonic vibration emitted by a vibrating element of the measuring element (34),
wherein the measuring element (34) is arranged to emit a measuring signal (M) towards the contents (10) in order to determine the level thereof, the closure device (4) being arranged to transmit an information signal representative of the level of the contents (10) of the container (2) measured by the measuring element (34) to a system (6) for managing said information,
**characterised in that** the container (2) comprises an identification label (43), the closure device (4) comprising a device for reading said identification label (43) so that the information signal is linked to the identity of the container (2) in the management system (6).

2. The measuring device according to claim 1, wherein the measuring element (34) is arranged to emit the measuring signal (M) after the closure device (4) has been secured to the neck (20).

3. The measuring device according to claim 2, arranged to identify the identity of the container (2) while the closure device (4) is attached to the neck (20).

4. The measuring device according to any of the preceding claims, further comprising a coating applied to said vibrating element forming a protective element (36) extending between the measuring element (34) and the lower edge (26) of the main wall (22) and transparent to the measuring signal (M) emitted by the measuring element (34).

5. The measuring device according to any one of claims 1 to 4, further comprising a device (40) for powering the measuring element (34), said measuring element (34) being able to emit the measuring signal (M) when it is powered with energy by said powering device (40).

6. The measuring device as claimed in claim 5, wherein the powering device (40) is housed in the internal volume (28) and electrically connected to the measuring element (34).

7. The measuring device according to claim 5, wherein the powering device (40) is rigidly connected to a second stopper (48) able to be fixed onto the main wall (22) of the first stopper (21) outside the internal volume (28) or onto the neck (20) of the opening (18) of the container (2), the measuring element (34) being powered by the powering device (40) when said second stopper (48) is fixed onto said first stopper (21) or onto said neck (20).

8. The measuring device according to any one of claims 1 to 7, further comprising an antenna (42), housed in the internal volume (28), said antenna (42) being arranged to transmit an information signal representative of the level of the contents (10) of the container (2) measured by the measuring element (34).

9. The measuring device according to any one of claims 1 to 8, wherein the main wall (22) is shaped to comprise an opening element (44, 46) of a cap and/or stopper closing the opening (18) of the container (2).

10. The measuring device according to any one of the preceding claims, wherein the device for reading the identification label (43) is configured to be opposite or within reading range of the identification label (43) when the closure device (4) is fixed to the container (2).

11. A method for measuring the level of contents in a container (2) by means of a measuring device according to any one of claims 1 to 10, comprising the following steps:
- closure of the container (2) containing the contents (10) by the closure device (4),
- emission of a measurement signal (M) by the measuring element (34) to an internal volume (28) of the container (2) to determine the level of the contents (10) in the container (2),
wherein the measuring element (34) emits a measuring signal (M) towards the contents (10) in order to determine the level thereof, the closure device (4) transmitting an information signal representative of the level of the contents (10) of the container (2) measured by the measuring element (34) to a system (6) for managing said information, the container (2) comprising an identification label (43), the closure device (4) comprising a device for reading said identification label (43) so that the information signal is linked to the identity of the container (2) in the management system (6).

12. The measuring method according to claim 11, wherein the device for reading the identification label (43) is arranged opposite or within reading range of the identification label (43) when the closure device (4) is fixed to the container (2).
